(19) **Europäisches Patentamt**

**European Patent Office**

**Office européen des brevets**

(11) Veröffentlichungsnummer: **0 170 928**
**B1**

(12) **EUROPÄISCHE PATENTSCHRIFT**

(51) Int. Cl.⁴: **F 16 J 15/32, F 16 J 15/16**

(45) Veröffentlichungstag der Patentschrift:
**02.11.88**

(21) Anmeldenummer: **85108671.0**

(22) Anmeldetag: **11.07.85**

(54) **Wellendichtung.**

(30) Priorität: **11.07.84 DE 3425431**
**29.01.85 DE 3502799**

(43) Veröffentlichungstag der Anmeldung:
**12.02.86 Patentblatt 86/7**

(45) Bekanntmachung des Hinweises auf die Patenterteilung:
**02.11.88 Patentblatt 88/44**

(84) Benannte Vertragsstaaten:
**AT CH DE FR GB IT LI SE**

(56) Entgegenhaltungen:
**DE-A-2 206 461**
**DE-C-903 878**
**GB-A-762 958**
**GB-A-933 133**
**GB-A-982 219**
**US-A-4 336 945**

(73) Patentinhaber: **Martin Merkel GmbH & Co. KG,**
**Sanitasstrasse 17- 21, D-2102 Hamburg 93 (DE)**

(72) Erfinder: **Müller, Heinz K., Prof. Dr.,**
**Aprikosenweg 2, D-7050 Waiblingen (DE)**
Erfinder: **Wolf, Andreas, Dipl.- Ing.,**
**Feldbergstrasse 61, D-7000 Stuttgart 80 (DE)**

(74) Vertreter: **Glawe, Delfs, Moll & Partner**
**Patentanwälte, Postfach 26 01 62 Liebherrstrasse**
**20, D-8000 München 26 (DE)**

EP 0 170 928 B1

LIBER, STOCKHOLM 1988

## Beschreibung

Die Erfindung betrifft eine Wellendichtung mit einem elastischen, von dem abzudichtenden Druck beaufschlagten Dichtring, dessen niederdruckseitige Stirnfläche über mehrere Vorsprünge abgestützt ist, derart, daß seine mit einer zylindrischen Gegengleitfläche zusammenwirkende Dichtfläche einen wellenartigen Verlauf aufweist.

Die Funktionsfähigkeit von Wellendichtungen ist häufig infolge der an den Dichtflächen entstehenden Reibungswärme begrenzt. Insbesondere bei Dichtungen mit druckabhängiger Dichtflächenanpressung entsteht bei der Abdichtung unter hohem Druck eine verhältnismäßig große Reibungsverlustleistung. Bestehen die Dichtungen dazuhin noch aus Werkstoffen mit geringem Wärmeleitvermögen, so besteht die Gefahr, daß die für den Werkstoff zuträgliche Temperatur an den Dichtflächen überschritten wird und dadurch die Dichtung frühzeitig ausfällt.

Eine in der Dichtungstechnik bekannte Maßnahme zur Verminderung der Reibleistung ist das gezielte Erzeugen eines die Gleitdichtflächen trennenden Schmierfilms, der den Dichtspalt ausfüllt. Die im Dichtspalt als Schmiermittel wirkende, abzudichtende Flüssigkeit kann die Reibungszahl beträchtlich vermindern. Gleichzeitig kann mittels einer dynamischen Schmierfilmbildung auch der Verschleiß der Gleitdichtflächen vermindert oder nahezu ganz vermieden werden.

Es ist bekannt, bei rotierenden Wellen einen Schmierfilm dadurch zu erzeugen, daß die Dichtkante in Umfangsrichtung betrachtet wellig ausgeführt ist. (GB-A-982 219, GB-A-933 133). Dies wird dadurch erreicht, daß der Dichtring axiale Vorsprünge aufweist, welche wechselnd auf beiden Stirnseiten entgegengesetzt gerichtet sind. Wird nun der mit den Vorsprüngen versehene Ring in eine Nut eingebaut, deren Breite geringer ist als die zwischen den Spitzen der Vorsprünge gemessene Breite des Dichtrings, so wird er mechanisch wellenartig verformt. Die in dieser Weise erreichte Wellenform ist daher durch die Gestalt des Rings mit der Nut von vornherein festgelegt, und zwar unbahängig von dem durch die Druckeinwirkung auf den Dichtring ausgeübten Axialschub. Die Abstimmung der Nutbreite auf die des Dichtrings schränkt die konstruktive Gestaltungsfreiheit wesentlich ein. Eine Verwendung dieses Dichtrings in herkömmlich vorgegebenen Einbauverhältnissen ist ausgeschlossen. Ein weiterer Nachteil der Dichtringe dieser Art ist, daß sie nicht drehsicher eingebaut sein. Auch verteuert die von einer einfachen Rotationsform abweichende Gestalt der Dichtringe deren Herstellung.

Die der Erfindung zugrundeliegende Aufgabe besteht daher in der Schaffung einer Dichtung der eingangs genannten Art, die diese Nachteile wermeidet.

Die erfindungsgemäße Lösung besteht darin, daß die Vorsprünge an einem Stützring angeordnet sind und der Dichtringquerschnitt zu wellenartiger Verformung unter der Einwirkung des abzudichtenden Drucks bemessen ist.

Infolge der wellenartigen Verformung des gesamten Dichtringquerschnitts wird auch der von Teilen dieses Querschnitts gebildete hochdruckseitige Dichtflächenrand in erwünschter Weise wellenartig verformt, so daß die Voraussetzungen für die Bildung eines hydrodynamischen Schmierfilms verbessert werden. Außerdem wirken die Vorsprünge als Verdrehsicherung.

Bei der Verwendung von Elastomer-Dichtringen wird der Erfindungsgedanke vorzugsweise dadurch verwirklicht, daß niederdruckseitig ein Stützring angeordnet wird, der auf seiner dem Dichtring zugewandten Seitenfläche wellenförmige Vorsprünge aufweist. Dabei kann die Steilheit der Wellen in Umfangsrichtung gesehen an den ansteigenden und den abfallenden Wellenflanken ungleich ausgeführt werden. In denjenigen Umfangsbereichen in denen sich der Dichtring unter der zu erwartenden Druckdifferenz am Stützring anlegt und in denen daher der Verlauf seiner Dichtflächenbegrenzung von dem Verlauf der Wellen des Stützrings bestimmt ist, kann der Konstrukteur daher die Schleppwirkung und damit die Schmierfilmbildung gezielt im Hinblick auf den abzudichtenden Druck steuern. Insbesondere für die Abdichtung hoher Druckdifferenzen kann es vorteilhaft sein, die Schleppgeschwindigkeitskomponente vom abzudichtenden Raum in den Dichtspalt hinein kleiner zu wählen als die Komponente, die die im Spalt befindliche Flüssigkeit wieder in den Hochdruckraum zurückschleppt. Wegen der Asymmetrie des Pressungsverlaufs im Dichtspalt ergibt sich in diesem Fall die beste dynamische Dichtwirkung.

Die Vorsprünge des Stützrings können erfindungsgemäß auch dergestalt ausgeführt werden, daß der Dichtring bei niederem Druck nur an den Kanten oder den Vorderflächen der Vorsprünge anliegt und erst bei ansteigendem Druck der Dichtring sich an weitere Teile der Stirnfläche des Stützrings anlegt. Diese Anordnung ist deshalb besonders vorteilhaft, weil sich hier die Welligkeit des Dichtflächenrands mit steigendem Druck kontinuierlich vergrößert und damit in erwünschter Weise die hydrodynamische Schmierwirkung mit steigendem Druck zunimmt.

Des weiteren können die Vorsprünge mit Vorteil prismenähnlich kantig oder mit geringem Krümmungsradius ausgeführt werden, so daß der Dichtring mit hoher örtlicher Flächenpressung und verhältnismäßig starker örtlicher Verformung anliegt. Der Dichtring wird somit an den Kanten der prismenartigen Vorsprünge formschlüssig verankert, wodurch sich die erforderliche Verdrehsicherung zwischen Dichtring und Stützring ergibt, was insbesondere dann von Bedeutung ist, wenn der Dichtring ein Kunststoffring mit gegenüber einem Elastomerring großer Biegesteifigkeit ist.

Bei der Verwendung von verhältnismäßig biegesteifen Dichtringen aus Kunststoff werden zusätzlich in bekannter Weise Spannringe aus Elastomer verwendet, die den Dichtring zur Unterstützung der Dichtwirkung vorspannen und gleichzeitig als Nebenabdichtung wirksam sind. Bei solchen Anordnungen wird vorzugsweise der die Vorsprünge aufweisende Stützring so ausgeführt, daß der radial zum Dichtring versetzt angeordnete Spannring ebenfalls an den Vorsprüngen des Stützrings anliegt, das heißt, daß die Vorsprünge radial über die ganze Stirnfläche des Stützrings sich erstrecken und daher sowohl den Dichtring als auch den Spannring abstützen. Jedoch ist es auch möglich, daß sie lediglich den Dichtring abstützen.

Werden erfindungsgemäß an beiden gegenüberliegenden Stirnflächen des Stützrings Vorsprünge angebracht, so ergeben sich dadurch weitere wesentliche Vorteile der Dichtungsanordnung. Wenn sich bei einer solchen Anordnung der Dichtring zwischen den Vorsprüngen so weit durchgebogen hat, daß er auch an dem zwischen den Vorsprüngen liegenden Teil des Ringstegs des Stützrings zur Anlage kommt, so kann bei weiterer Drucksteigerung einer Zunahme der Welligkeit nur bei entsprechender Verformung des auf der anderen Seite nur partiell abgestützten Stützrings erfolgen. Der Konstrukteur hat es damit in der Hand, durch geeignete Abstimmung der Biegesteifigkeit sowohl des Dichtrings als auch des Stützrings eine bis zum höchsten abzudichtenden Druck zunehmende Welligkeit des hochdruckseitigen Dichtflächenrandes druckabhängig in solcher Weise zu steuern, daß der Dichtring der Verformungszunahme bei hohem Druck einen vorherbestimmbar größeren Widerstand entgegensetzt als bei niederem Druck. Ein weiterer Vorteil der auf der Niederdruckseite des Stützrings zusätzlich angebrachten Vorsprünge besteht darin, daß sie als Anschläge zur Verdrehsicherung des Stützrings dienen können. Vorzugsweise in der Wand des Gehäuses oder in einer Stirnfläche der Welle, an die sich der Stützring unter Druckeinwirkung anlegt, werden Vorsprünge, Stifte oder dergleichen angebracht, die in die Lücken zwischen den Vorsprüngen auf der druckabgewandten Seite des Stützrings eingreifen. Schließlich wird durch das beidseitige Anbringen von gleichartigen Vorsprüngen am Stützring erfindungsgemäß als weiterer Vorteil die Möglichkeit eines versehentlich seitenverkehrten Einbaus des Stützrings ausgeschlossen.

Eine besonders vorteilhafte Dichtungsanordnung wird erfindungsgemäß dadurch erreicht, daß als Dichtring eine Ringscheibe in der Art einer Tellerfeder verwendet wird, die sich auf einer mit Vorsprüngen versehenen, konischen Stirnfläche des Stützrings abstützt. Vorzugsweise wird auch hier in bekannter Weise die Dichtwirkung gegenüber dem bewegten Maschinenteil dadurch erreicht, daß eine am Dichtring angebrachte Kante an die Gegengleitfläche angepreßt wird.

Beidseitig oder einseitig mit Vorsprüngen versehene Stützringe können erfindungsgemäß ohne weiteres auch in Verbindung mit an sich für Axialbewegung vorgesehene Hydraulik-Dichtkantenringen zur Abdichtung rotierender Wellen verwendet werden.

Eine in wirtschaftlicher Hinsicht besonders vorteilhafte Bauweise der erfindungsgemäß mit Vorsprüngen versehenen Stützringe ergibt sich, wenn sie aus Endlosbändern hergestellt werden. Damit können auch hier Dichtungsanordnungen für beliebige Wellendurchmesser mittels ein und desselben "Stützbandes" hergestellt werden, das vor der Montage auf die erforderliche Länge geschnitten und unter Belassen eines Stoßspalts ringförmig gebogen in die entsprechende Ringnut eingebaut wird.

Schließlich kann die erfindungsgemäß druckabhängig zunehmende Welligkeit des hochdruckseitigen Dichtflächenrands bei Dichtringen aus Kunststoff auch dadurch erreicht werden, daß die Vorsprünge an der druckabgewandten Stirnfläche des Dichtrings angebracht werden. Vorzugsweise kann der Dichtring in diesem Fall an einer ebenen Wand abgestützt werden, wobei jedoch wiederum die Vorsprünge die Nebenfunktion der Verdrehsicherung übernehmen können.

Eine in technischer Hinsicht optimale Bauweise einer Dichtungsanordnung mit den erfindungsgemäßen Merkmalen ergibt sich, wenn durch eine besondere geometrische Anordnung des Spannrings relativ zur Dichtkante des Dichtrings einersetis gerade die dichtungstechnisch erforderliche minimale Dichtkantenanpressung erzeugt wird und andererseits infolge eines partiell sich durchbiegenden Dichtringquerschnitts hochdruckseitig ein axial wellenförmiger Dichtflächenrand erzeugt wird. Dies wird erfindungsgemäß dadurch erreicht, daß die Ebene, in der der Dichtring an den Vorsprüngen zur Anlage kommt, axial gegenüber der druckabgewandten Anlagefläche des Spannrings zur Niederdruckseite hin versetzt angeordnet ist, und gleichzeitig in bekannter Weise /4/ die Dichtkante des Dichtrings in unmittelbarer Nähe der druckabgewandten Stirnfläche des Dichtrings angeordnet ist. Die Kombination der an sich bekannten Entlastung der Dichtkante vom abzudichtenden Druck einerseits mit der erfindungsgemäßen, druckabhängig zunehmenden Schmierwirkung infolge des sich wellenförmig verformenden hochdruckseitigen Dichtflächenrandes ergibt zusammen eine auf andere Weise nicht erreichbare Standzeit der Dichtung. Gleichzeitig wird bei dieser Dichtungsanordnung sowohl die beim Anfahren zu überwindende Haftreibung als auch die Gleitreibung beim andauernden Lauf der Welle minimal. Dadurch können einerseits unerwünschte Ruck-Gleitbewegungen (Stick-Slip) vermieden werden und andererseits bleibt die Reibungsverlustleistung im gesamten Betriebsbereich der Dichtung klein.

In manchen Fällen ist es erforderlich, daß der Dichtring radialen Bewegungen der Wellenoberfläche, die von Unrundheit, Wellenschlag oder dergleichen herrühren können, folgen kann. Die unmittelbare Radialbeweglichkeit des Dichtrings in seiner Aufnahmenut kann aber durch die zwischen der Dichtung und den als Anlageflächen wirkenden, erfindungsgemäßen Vorsprüngen auftretende Reibung behindert sein. Dieser Nachteil wird erfindungsgemäß dadurch beseitigt, daß der Dichtring in einer Hülse angeordnet ist, wobei die Hülse gegenüber dem Gehäuse ein radiales Spiel aufweist. Das Spiel wird dabei mindestens so groß gewählt, daß die vom Dichtring auf die Hülse übertragene Radialbewegung der Welle ohne eine radiale Berührung zwischen der Hülse und dem Gehäuse erfolgen kann. Die Hülse wird gegenüber dem Gehäuse durch einen weiteren Dichtring abgedichtet und axial abgestützt.

Bei hohem abzudichtenden Druck kann der zwischen der Dichtfläche und dem Stützring liegende Teil des Dichtrings sich durch die radial gerichtete Presskraft des Spannrings in unerwünschter Weise radial so verformen, daß die Dichtfläche eine unerwünschte Vergrößerung erfährt. Dieser Nachteil wird erfindungsgemäß dadurch beseitigt, daß jeder Vorsprung einen Absatz aufweist, der dem Dichtring an derjenigen Seite, zu der hin er sich zu verformen trachtet, radial abstützt. Der Absatz kann ein Abschnitt einer Kegelfläche oder einer Zylinderfläche sein. Der Dichtring legt sich dann, wenn er durch den Spannring radial verformt wird, an den Absatz an, wodurch eine weitere Radialbewegung des Dichtrings verhindert wird. Damit die zwischen den Vorsprüngen liegenden, vom Druck axial verformten Bereiche des Dichtrings ebenfalls radial abgestützt werden, können auch an den zwischen den Vorsprüngen liegenden Flächen des Stützrings solche Absätze angeordnet sein. Obwohl erfindungsgemäß die Radialbeweglichkeit zwischen Dichtring und Stützring in erwünschter Weise durch die Absätze behindert ist, ermöglicht nach wie vor die globale Radialbeweglichkeit der den Dichtring aufnehmenden Hülse die Anpassung des Dichtrings an statische oder dynamische Exzentrizitäten des rotierenden Maschinenteils.

Entstehen infolge hoher Anpresskräfte des Dichtrings gegenüber dem rotierenden Maschinenteil und gleichzeitig hoher relativer Gleitgeschindigkeit auch große Reibleistungen, so besteht die Forderung, die Erwärmung des abzudichtenden Fluids in unmittelbarer Nähe der Dichtfläche durch besondere Maßnahmen zu begrenzen. Erfindungsgemäß wird dies dadurch erreicht, daß die an sich schon durch die Umfangswelligkeit der erfindungsgemäßen Dichtungsanordnung erzeugte Flüssigkeitsströmung durch einen zwangsläufigen Austausch der die gesamte Dichtung umgebende Flüssigkeitsmenge verstärkt wird. Eine zusätzliche Kühlung der wärmeerzeugenden Gleitdichtflächen wird in besonders vorteilhafter Weise dadurch erzeugt, daß seitlich vom Dichtring ein relativ zu diesem ruhender Pumpring angeordnet wird. Der Pumpring bildet gegenüber einer Umfangsfläche des rotierenden Maschinenteils einen engen Spalt, und weist an seiner diesen Spalt bildenden Oberfläche mehrere zur Wellenachse schräg angeordnete Nuten auf. Infolge der Rotationsbewegung wird die vom drehenden Maschinenteil mitgeschleppte Fluidmenge an den Seitenwänden der schrägen Nuten aufgestaut, wodurch eine axialgerichtete, kühlende Flüssigkeitsströmung erzeugt wird. Vorzugsweise wird dieser kühlende Fluidstrom durch mehrere in der gegenüberliegenden Umfangsfläche des Pumprings angeordnete Nuten zurückgeführt.

Bei der Montage und beim Einbau der verschiedenen Teile des erfindungsgemäßen Dichtsystems in die abzudichtende Maschine besteht einerseits die Gefahr, daß funktionsbestimmende Teile, beispielsweise ein asymmetrisch geformter Stützring, unzweckmäßig in verkehrter Lage eingebaut werden. Weiterhin besteht auch die Gefahr, daß die empfindliche Dichtkante des Dichtrings beim Einbau verletzt wird. Erfindungsgemäß wird dieser Nachteil dadurch beseitigt, daß das gesamte Dichtsystem, bestehend aus Dichtring, Spannring, Stützring und gegebenenfalls einem Pumpring bereits im Herstellerwerk in eine Hülse eingebaut wird, wobei eine montagegünstige Baueinheit entsteht. Die Montage der Baueinheit durch den Anwender ist dann sehr einfach, da diese als Ganzes nur noch in eine Gehäusebohrung der abzudichtenden Maschine eingesteckt werden muß.

Wenn bei einer Maschine von einem stationären Gehäuse Fluide über mehrere, getrennte Kanäle in das rotierende Maschinenteil zu übertragen sind, so werden sogenannte Mehrfach-Drehdurchführungen verwendet. Dabei besteht die Aufgabe, axial aneinandergrenzende Ringräume gegeneinander abzudichten. Da es hier wegen der mehrfachen Dichtungsanordnung und entsprechend großer Gesamtreibleistung entscheidend darauf ankommt, daß die Reibleistung der einzelnen Dichtung möglichst gering ist, ist die Anwendung des erfindungsgemäßen Dichtsystems hier besonders vorteilhaft. Dabei stellt sich die besondere Aufgabe, jede einzelne der die Dichtungen aufnehmenden Nuten an mindestens einer ihrer Seitenwände mit den erfindungsgemäßen Vorsprüngen zu versehen. Diese Aufgabe wird fertigungstechnisch in besonders vorteilhafter Weise dadurch gelöst, daß die Nuten durch verschiedene axial aneinandergrenzende Ringe gebildet werden, wobei jeweils die eine druckabgewandte Nutseitenwand bildenden Ringoberflächen die erfindungsgemäßen Vorsprünge aufweisen.

Dichtsysteme der erfinungsgemäßen Art werden jedoch auch eingesetzt, wenn zu unterschiedlichen Zeiten auch unterschiedlich hohe Druckdifferenzen abzudichten sind. Falls nun etwa gleich nach der ersten Installation der Dichtung eine sehr kleine Druckdifferenz abzudichten ist, so kann es vorkommen, daß die auf den Dichtring dabei einwirkende Kraft noch nicht ausreicht, um eine die Schmierung begünstigende und das Mitdrehen des Dichtrings verhindernde wellenförmige Verformung des Dichtrings zu bewirken. In diesem Fall werden erfindungsgemäß an beiden, an den Dichtring angrenzenden Seitenwänden des Gehäuses, bzw. des die Dichtung umgebenden Raumes, erfindungsgemäße Vorsprünge angebracht, dergestalt, daß die in Umfangsrichtung gesehen jeweils um eine halbe Teilung gegeneinander versetzten Vorsprünge der gegenüberliegenden Seitenwände dem Dichtring bereits im druckdifferenzlos eingebauten Zustand eine wellige Form aufprägen. Dies wird in Verbindung mit den am Umfang gegeneinander versetzten Mitten der Vorsprünge dadurch erreicht, daß die dem Dichtring zugewandten Vorderflächen der Vorsprünge einen axial gemessenen Abstand aufweisen, der kleiner ist als die axial gemessene Breite des Dichtrings.

Nachfolgend wird die Erfindung anhand der in der Zeichnung dargestellten Ausführungsbeispiele erläutert. Es zeigen:

Figur 1 einen Längsschnitt durch eine Dichtungsanordnung,

Figur 2 einen in dieser Dichtungsanordnung verwendbaren Stützring,

Figur 3 und 4 Längsschnitte durch zwei weitere Ausführungsformen, der Dichtungsanordnung,

Figur 5 die perspektivische Ansicht eines Stützrings und eines Dichtrings mit Spannring,

Figur 6 einen Auschnitt aus einer in die Ebene abgewickelten Darstellung der Dichtungsanordnung nach Figur 4,

Figur 7 eine der Figur 6 gleichende Darstellung mit einem abgewandelten Stützring,

Figur 8 einen Längsschnitt durch eine weitere Ausführungsform der Dichtungsanordnung,

Figur 9 einen dafür verwendbaren Stützring in perspektivischer Darstellung,

Figur 10 bis 13 Längsschnitte durch weitere Ausführungsformen der Dichtungsanordnung,

Figur 14 eine Reihe von Formvarianten der Vorsprünge,

Figur 15 einen Längsschnitt durch eine weitere Ausführungsform einer Dichtungsanordnung,

Figur 16 in perspektivischer Darstellung den dafür verwendbaren Pumpring,

Figur 17 einen Längsschnitt durch eine weitere Ausführungsform einer Dichtungsanordnung,

Figur 18 den dafür verwendbaren Stützring in perspektivischer Ansicht,

Figur 19 einen Längsschnitt durch eine Mehrfachdichtungsanordnung,

Figur 20 einen Längsschnitt durch eine weitere Ausführungsform der Dichtungsanordnung und

Figur 21 und 22 die Abwicklung des Dichtelements gemäß Figur 20 in perspektivischer Darstellung mit unterschiedlicher Blickrichtung.

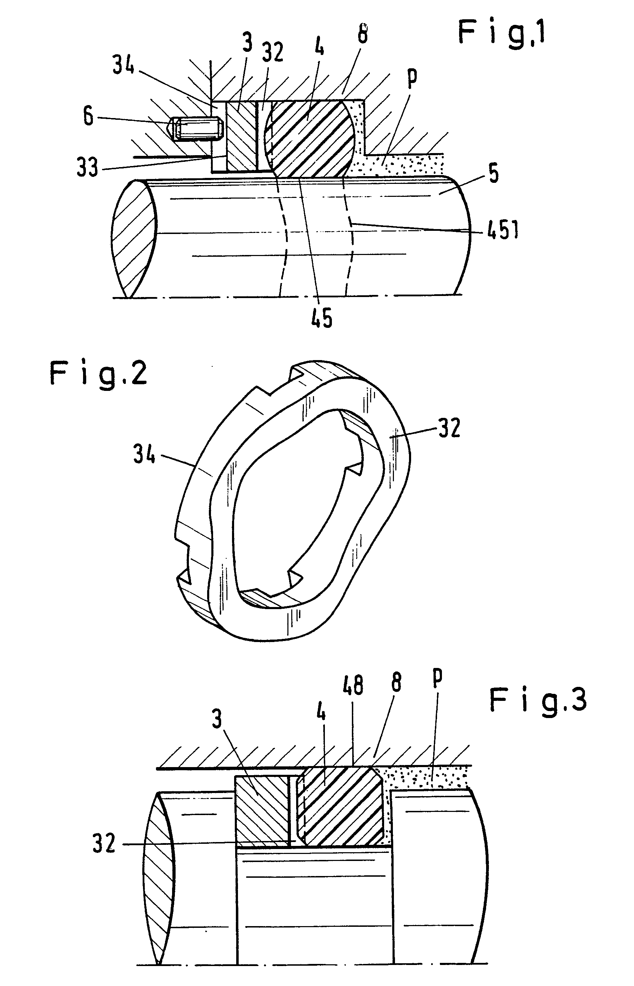

Die Figuren 1 bis 3 zeigen die Elemente einer Anordnung mit einem Elastomer-Dichtring 4 und einem Stützring 3. Gemäß Fig. 1 sind der Dichtring und der Stützring in einer radialen Nut des zylindrischen Außenteils 8 eingebaut. Der Dichtring bildet zusammen mit der Oberfläche der Welle 5 die Gleitdichtfläche 45. Unter der Einwirkung des abzudichtenden Druckes p legt sich der Dichtring zunächst an den Vorsprüngen 32 des Stützrings 3 an. Bei zunehmendem Druck biegen sich die zwischen den Vorsprüngen liegenden Teilstücke des Dichtrings axial durch. Dadurch nimmt der Dichtring einschließlich des druckseitigen Randes 451 der Gleitdichtfläche eine wellige Form an. Bei einer durch den Biegewiderstand des Dichtrings vorbestimmbaren Druckschwelle liegt der Dichtring an der Oberfläche des Stützrings über den gesamten Umfang an, wodurch seine maximale Verformung begrenzt und seine Gestalt bei maximaler Verformung definiert werden kann. An der vom Dichtring abgewandten Stirnfläche 33 des Stützrings sind Vorsprünge 34 angebracht, in die zwecks Verdrehsicherung zwischen Außenteil und Stützring Stifte 6 eingreifen. Die Verdrehsicherung zwischen Dichtring und Stützring erfolgt automatisch dadurch, daß infolge des verformungsbedingten Ineinandergreifens von Dichtring und Stüzring eine formschlüssige Verbindung entsteht. Bei dem Stützring gemäß Fig. 2 sind beispielsweise die druckseitigen Vorsprünge 32 wellenförmig und die Vorsprünge 34 prismatisch ausgeführt. Fig. 3 zeigt eine Anordnung, bei der der Dichtring 4 und der Stützring 3 in einer Nut der Welle angeordnet sind, wobei die Gleitdichtfläche 48 durch eine Umfangsfläche des zylindrischen Außenteils 8 gebildet wird.

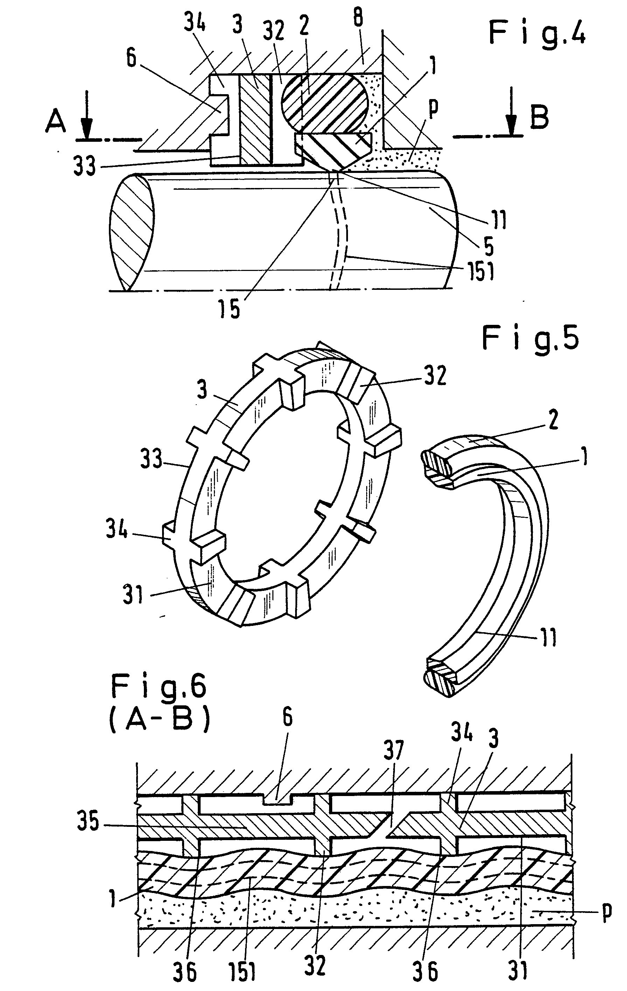

Die Figuren 4 bis 6 zeigen die Elemente einer Anordnung mit einem Dichtring 1 aus Kunststoff, einem Elastomer-Ring 2 als Spannring und Nebenabdichtung und einem Stützring 3. Fig. 4 zeigt die Anordnung als Wellendichtung im Längsschnitt, wobei der Dichtring, der Spannring und der Stützring in einer radialen Nut des zylindrischen Außenteils 8 eingebaut sind. Die Dichtkante 11 des Dichtrings 1 bildet zusammen mit der Oberfläche der Welle 5 die Gleitdichtfläche 15. Unter der Einwirkung des abzudichtenden Drucks p legt sich der Dichtring zunächst an den Vorsprüngen 32 des Stützrings 3 an.

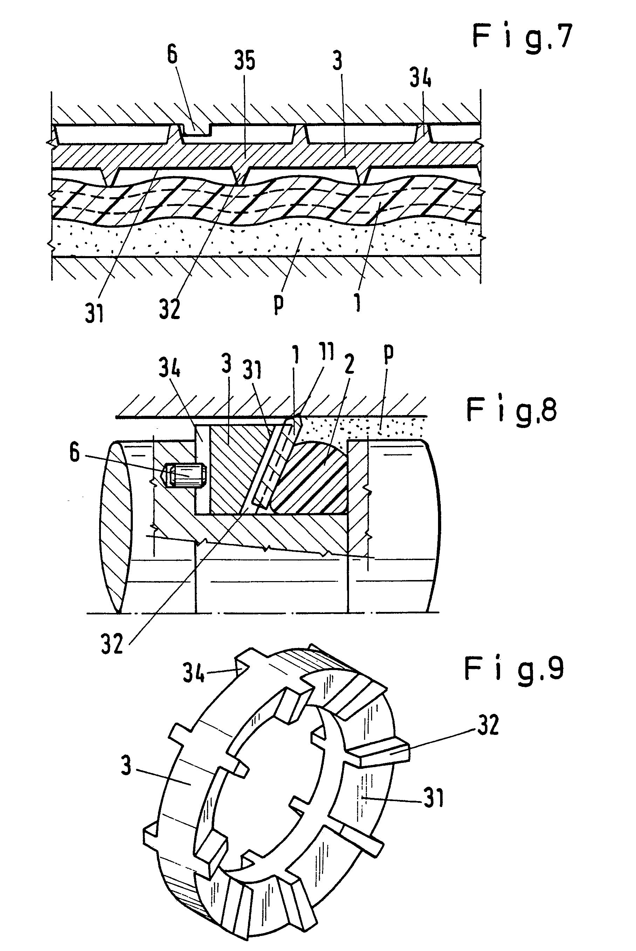

Gleichzeitig legt sich auch der Spannring 2 an den Vorsprüngen 32 an. Bei zunehmendem Druck biegen sich die zwischen den Vorsprüngen 32 liegenden Teile des Dichtrings und des Spannrings in Richtung der Wellendrehachse durch. Dadurch nimmt der Dichtring einschließlich des druckseitigen Randes 151 seiner Gleitdichtfläche eine wellige Form an. An der vom Dichtring abgewandten Stirnfläche 33 des Stützrings sind Vorsprünge 34 angebracht, in die zwecks Verdrehsicherung zwischen Außenteil und Stützring Vorsprünge 6 eingreifen. Die Verdrehsicherung zwischen Dichtring und Stützring erfolgt automatisch dadurch, daß infolge des verformungsbedingten Ineinandergreifens von Dichtring und Stützring eine formschlüssige Verbindung entsteht. Fig. 5 zeigt in perspektiver Darstellung einen erfindungsgemäßen Stützring, bei dem beispielsweise die druckseitigen Vorsprünge 32 prismenförmig mit radial gerichteten Längskanten ausgeführt sind. Die gegenüberliegenden Vorsprünge 34 sind beispielsweise gleich ausgeführt wie die Vorsprünge 32, so daß hier der Stützring in bezug auf seine zur Wellenachse senkrechte Mittelebene spiegelsymmetrisch ausgeführt ist. Der Dichtring 1 mit seiner Dichtkante 11 wird durch einen O-Ring 2 gespannt und sekundär abgedichtet. Analog zur der Darstellung in Fig. 3 kann selbstverständlich auch die Kombination aus Dichtring, Spannring und Stützring so angeordnet werden, daß alle drei Ringe gemeinsam in einer radialen Nut der Welle liegen, wobei die dann außen liegende Dichtkante des Dichtrings gegen eine Umfangsfläche des zylindrischen Außenteils 8 abdichtend zur Anlage kommt. Fig. 6 zeigt einen Ausschnitt aus einer in die Ebene abgewickelten Darstellung der Dichtungsanordnung nach den Bildern 4 und 5. Hier wird die verformungsbedingte Verankerung des durchgebogenen Dichtrings 1 an den Kanten 36 der prismenförmigen Vorsprünge 32 deutlich erkennbar. Auch wird in dieser Darstellung deutlich, daß sich auch der Ringsteg 35 des Stützrings 3 zwischen den Vorsprüngen 34 durchzubiegen beginnt, sobald sich bei einem bestimmten Druck p der durchgebogene Dichtring 1 an den zwischen den Vorsprüngen 32 liegenden Teilen der Oberfläche 31 abstützt. Bei weiter zunehmendem Druck kann daher die Verformung des Dichtrings noch weiter zunehmen, allerdings langsamer wegen des durch den Stützring vergrößerten Verformungswiderstands.

Fig. 7 zeigt einen Ausschnitt aus einer in die Ebene abgewickelten Darstellung der erfindungsgemäßen Dichtungsanordnung mit dem Dichtring 1 und dem Stützring 3. Der Dichtring liegt an den prismatischen Vorsprüngen 32 des Stützrings an während dieser sich auf prismatischen Vorsprüngen 34 an einer Wand abstützt, aus der zwecks Verdrehsicherung Vorsprünge 6 herausragen. In diesem Ausführungsbeispiel sind die Vorsprünge 32 und 34 jeweils am Umfang um eine halbe Teilung gegeneinander versetzt, so daß hier die Durchbiegung des Dichtrings nicht mehr weiter zunimmt, wenn er die Oberfläche 31 des Stützrings berührt, wogegen aber die Durchbiegung zwischen den Vorsprüngen 32 bei steigendem Druck weniger stark zunimmt, da der Bereich 35 des Ringstegs zwischen den Vorsprüngen 34 nachgiebig ist.

Die Figuren 8 und 9 zeigen die Elemente einer Anordnung der erfindungsgemäßen Wellendichtung mit einem Dichtring 1 in der Form einer konischen Tellerfeder mit der Dichtkante 11, einem Spannring 2 als O-Ring aus Elastomer sowie einem Stützring 3 mit aus seiner konischen Stirnfläche 31 hervorstehenden Vorsprüngen 32. An seiner druckabgewandten Stirnfläche weist der Stützring Vorsprünge 34 auf, in die Stifte 6 eingreifen. Fig. 9 zeigt den konischen Stützring der Anordnung nach Fig. 8 in perspektiver Darstellung.

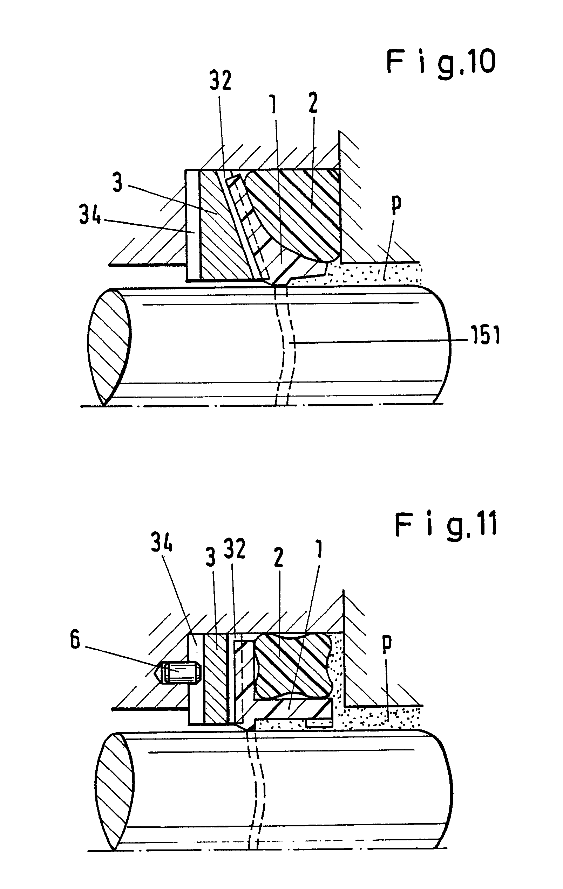

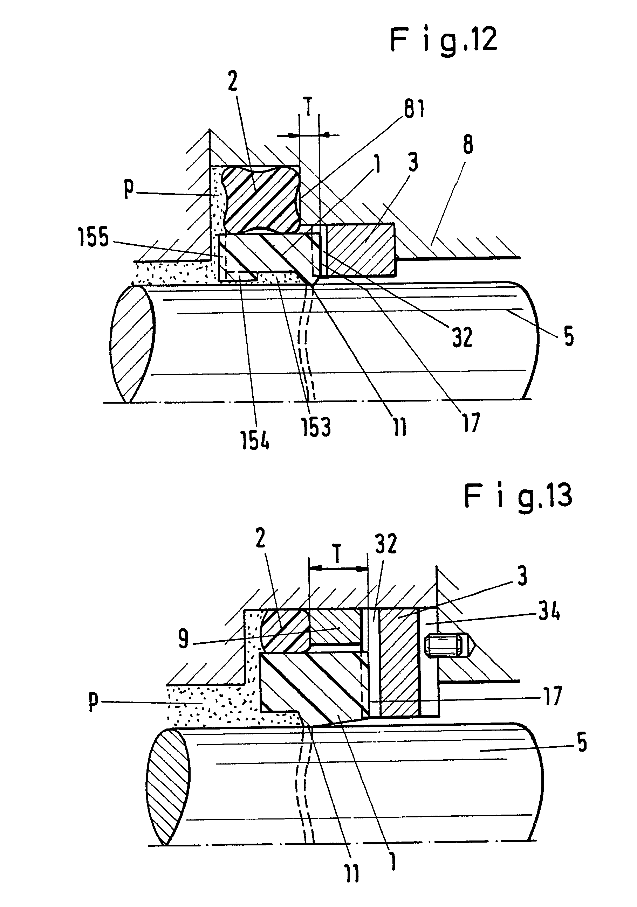

Die Figuren 10 und 11 zeigen weitere Varianten der erfindungsgemäßen Wellendichtung, jeweils mit den Dichtringen 1, den Spannringen 2, den Stützringen 3 mit den Vorsprüngen 32 und 34 sowie den in die Lücken zwischen den Vorsprüngen 34 zwecks Verdrehsicherung eingreifenden Stiften 6. Dabei besteht der Dichtring im Querschnitt jeweils aus einem radial oder angenähert radial verlaufenden Flügel, dessen Verlängerung etwa zur Gleitdichtfläche 151 führt und die an dem Stützring anliegt und durch ihre Verformung die Gestalt der Gleitdichtfläche verändert, sowie aus einem mehr axial zur Druckseite gerichteten Flügel, auf den der Spannring 2 hauptsächlich einwirkt.

Die Fig. 12 zeigt schließlich eine im Hinblick auf Reibung und Schmierung optimale Gestaltung der erfindungsgemäßen Wellendichtung. Der Dichtring 1 aus Kunststoff weist eine möglichst nahe seiner vom Druck p abgewandten Stirnfläche 17 liegende Dichtkante 11 auf. Der Spannring 2 ist ein X-Ring aus Elastomer. Der Stützring 3 mit seinen stirnseitigen Vorsprüngen 32 ist mit dem Gehäuse 8 verdrehgesichert verbunden und axial so angeordnet, daß die Stirnfläche 81 der Gehäusenut, an der der Spannring an seiner druckabgewandten Stirnfläche anliegt gegenüber der druckabgewandten Stirnfläche 33 des Dichtrings um das Maß "T" axial versetzt ist. Durch geeignete Wahl von "T" kann die vom Spannring auf den Dichtring übertragene Radialkraft auf die dichtungstechnisch gerade noch notwendige Größe festgelegt werden, wodurch sich andererseits die kleinste mögliche Reibungskraft zwischen Dichtring und rotierender Welle ergibt. So sorgt der Spannring einerseits für eine hinreichende Vorspannung im drucklosen Zustand. Andererseits besteht im druckbeaufschlagten Zustand ein weitgehender Ausgleich zwischen der von dem Spannring radial nach innen auf den Dichtring ausgeübten Kraft und der von dem Mediumsdruck innerhalb des Ringraums 153 zwischen Dichtring und Welle herrührenden, radial nach außen wirkenden Kraft. Durch geeignete Bemessung des Maßes "T" läßt sich dieser Kräfteausgleich in beliebiger Weise variieren.

Der Ringraum 153 zwischen Dichtring und Welle 5 ist mittels mindestens einer axialen Nut 154 im Dichtring mit dem abzudichtenden Raum verbunden und somit immer mit dem Druck p, den Dichtring radial entlastend, beaufschlagt. Weiterhin ist an der druckzugewandten Stirnfläche des Dichtrings mindestens eine radiale Nut 155 vorhanden, um den abzudichtenden Druck p auch in den Nutraum vor dem Spannring gelangen zu lassen. Dadurch ist sichergestellt, daß der Spannring auch bei schneller Änderung des Druckes immer mit dem Druck p in voller Höhe belastet wird.

Fig. 13 zeigt eine weitere Ausführung einer erfindungsgemäßen Wellendichtung bei der neben der Erzeugung einer sich druckabhängig vergrößernden Welligkeit der Gleitdichtfläche das so eben erläuterte Prinzip der Teilentlastung der Dichtkante 11 von der Wirkung des abzudichtenden Drucks angewendet ist. Beide Wirkungen zusammen ergeben ein optimales Dichtverhalten bei kleinstmöglicher Reibung und damit praktisch keinen Verschleiß. In Fig. 13 ist gezeigt, wie mit einem üblicherweise als Hydraulikdichtung verwendeten PTFE-Dichtkantenring 1 eine rotierende Welle nahezu ohne Leckage und bei kleinster Reibung abgedichtet wird, indem sich der Dichtring axial an den Vorsprüngen 32 eines Stützrings 3 abstützt. Der zusätzliche Distanzring 9 bewirkt hier eine um das Maß ''T'' axial versetzte Abstützung der Rückseite des Spannrings, der hier beispielsweise als O-Ring ausgeführt ist. Zwischen Dichtring und Distanzring ist soviel Radialspiel vorhanden, daß keine Radialkraft vom Distanzring auf den Dichtring übertragen werden kann. Dadurch, sowie durch die Wahl des Maßes ''T'' hat es der Konstrukteur der Dichtung in der Hand, die druckabhängig zunehmende radiale Anpressung der Dichtkante 11 so zu wählen, daß Leckage einerseits und Reibungsleistung der Dichtung andererseits entsprechend der speziellen Aufgabenstellung optimal aufeinander abgestimmt werden.

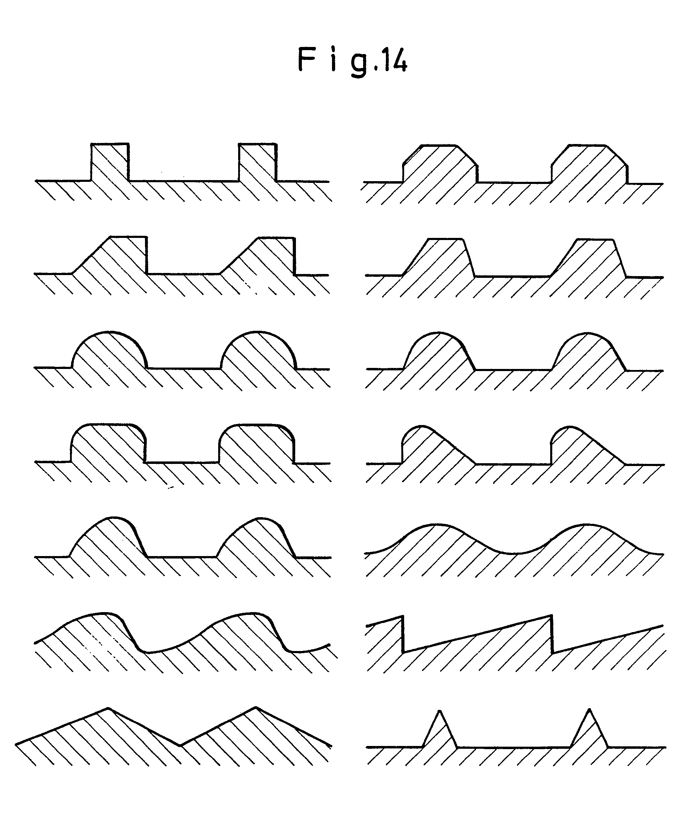

Fig. 14 zeigt eine Reihe von Formvarianten der Vorsprünge, die erfindungsgemäß zu axialen Abstützung des Dichtrings dienen. Die Vorsprünge können an einem Stützring oder am Dichtring angebracht sein.

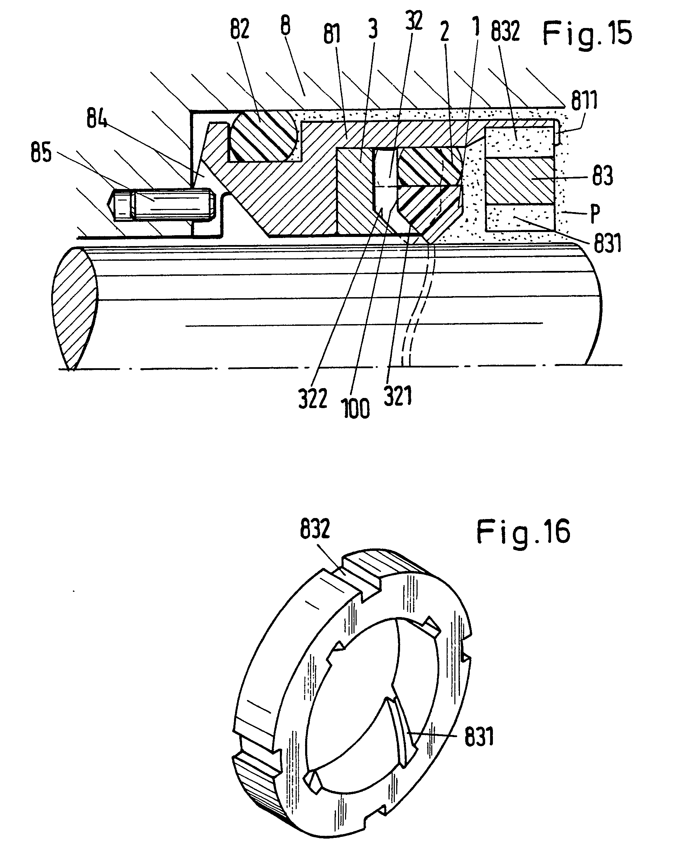

Fig. 15 zeigt eine Anordnung mit dem Dichtring 1, dem Spannring 2, dem Stützring 3 mit seinen Absätzen 321 und 322. Diese Teile sind in der Hülse 81 angeordnet, wobei auf der dem abzudichtenden Fluid zugewandten Seite des Dichtrings der Pumpring 83 mit den zur Achse schrägen Nuten 831 und den Rückführnuten 832 angeordnet ist. Der Pumpring wird durch Umbiegen des Randes 811 der Hülse 81 gesichert. Die Abdichtung der Hülse gegenüber dem Gehäuse 8 erfolgt durch die Elastomerdichtung 82. Die Hülse 81 weist eine Mehrzahl von über den Umfang verteilten, elastischen Vorsprüngen 84 auf und stützt sich über diese axial am Gehäuse ab, wobei Stifte 85, die zwischen die Vorsprünge 84 eingreifen, eine relative Verdrehung zwischen der Hülse und dem Gehäuse verhindern.

Fig. 16 zeigt in perspektiver Darstellung den Pumpring 83 mit seinen schrägen Nuten 831 und seinen axial angeordneten Rückführnuten 832.

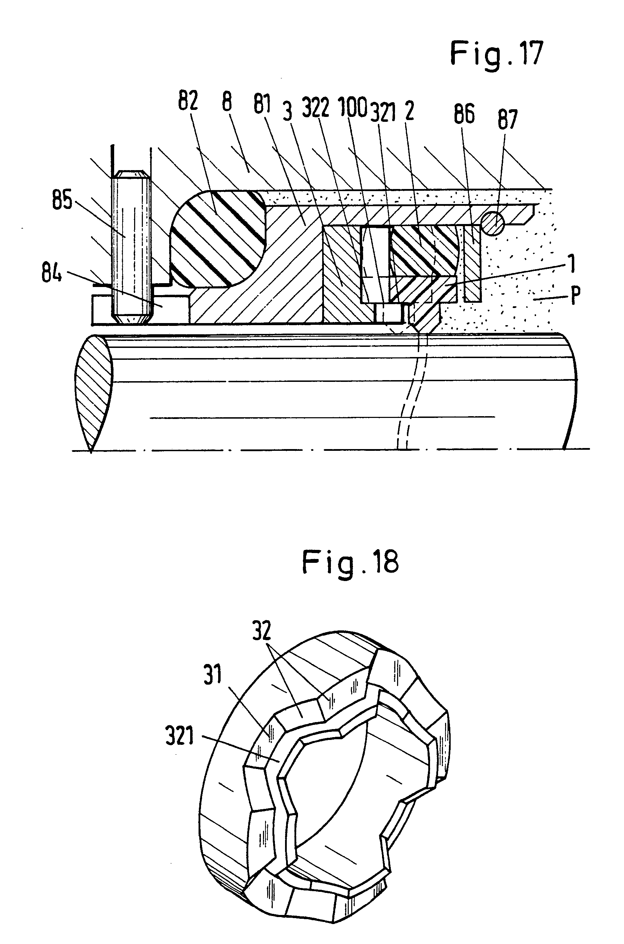

Fig. 17 zeigt eine Dichtungsanordnung mit dem Dichtring 1, dem Spannring 2, dem Stützring 3 und dessen Absätzen 321, eingebaut in die Hülse 81 und gegen Herausrutschen auf der Hochdruckseite durch die Scheibe 86 und den Sprengring 87 gesichert. Die Hülse 81 stützt sich im Gehäuse 89 über den Elastomerdichtring 82 sowohl axial als auch radial elastisch ab. Die Dichtung 82 übernimmt gleichzeitig die Abdichtung der Hülse gegenüber dem Gehäuse. Ein Stift 85 greift radial in Ausnehmungen 84 der Hülse 81 ein und verhindert damit eine relative Verdrehung zwischen der Hülse und dem Gehäuse.

Fig. 18 zeigt in perspektiver Darstellung den Stützring der Anordnung nach Figur 17 mit den erfindungsgemäßen Vorsprüngen 32 und den sowohl an den Vorsprüngen als auch an den zwischen den Vorsprüngen liegenden Wänden 31 des Stützrings angebrachten Absätzen 321. Diese Absätze greifen unter formentsprechende Kanten 100 oder vorspringende Flächen des Dichtrings und verhindern so ein radiales Gleiten des Dichtrings unter der Einwirkung der Druckdifferenz bzw. aufgrund schiefer Biegung bei der Verformung.

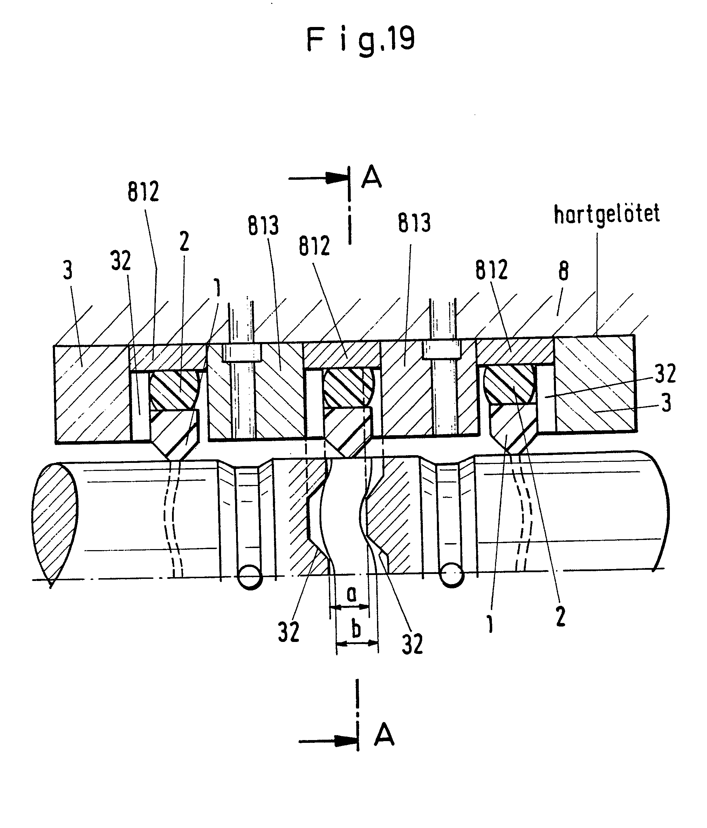

Fig. 19 zeigt die Anordnung einer Drehdurchführung mit insgesamt 3 Dichtsystemen der erfindungsgemäßen Art. Das System ist aus einzelnen ringartigen Körpern aufgebaut, die allesamt mit dem Gehäuse 8 durch Hartlötung verbunden sind. Die den Dichtring 1 und den Spannring 2 aufnehmende Nut wird durch den Stützring 3, den Außenring 812 und den Ring 813 gebildet. Dieses zwei getrennte Fluidkanäle enthaltende Drehdurchführungs-System ist spiegelsymmetrisch zur Mittelebene A-A ausgeführt. Dabei sind die Vorsprünge 32 der beiden Stützringe 813 in Umfangsrichtung um eine halbe Teilung der Vorsprünge 32 gegeneinander versetzt angeordnet. Gleichzeitig ist in der mittleren Dichtungsnut der Abstand a der Vorsprünge kleiner als die axiale Breite b der Dichtung 1, wodurch bereits im drucklos eingebauten Zustand eine Welligkeit des Dichtungsumfangs entsteht.

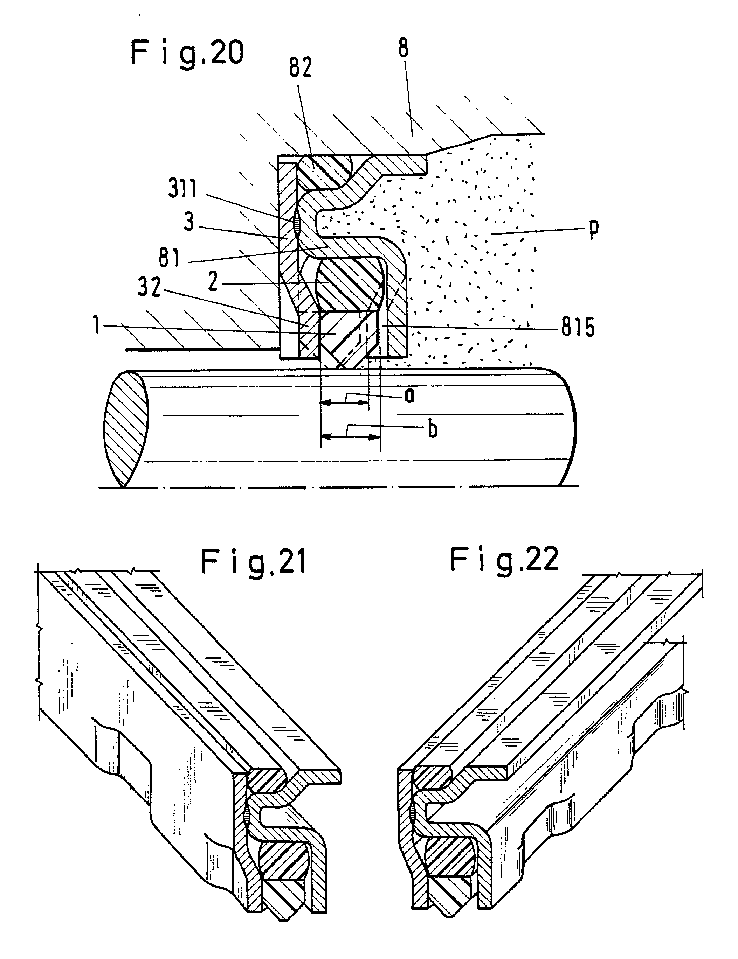

Fig. 20 - 22 zeigen schließlich eine Ausführung der erfindungsgemäßen Wellendichtung mit einem Dichtring 1, einem Spannring 2, einem Stützring 3 und einer Hülse 81. Diese Dichtungsanordnung ist vorzugsweise einbaugleich mit Radialwellendichtringen ausgeführt, wobei die Elastomerdichtung 82 die Hülse statisch gegenüber dem Gehäuse 8 abdichtet. Hülse und Stützring sind als Ziehteile aus Metallblech ausgeführt und stoffschlüssig, vorzugsweise mittels Punktschweißung 311 miteinander verbunden. Die Vorsprünge 32 am Stützring und die Vorsprünge 815 an der inneren Stirnfläche der Hülse sind beim Herstellvorgang der Blechteile mit eingeprägt. Die Vorsprünge 32 und 815 sind jeweils um eine halbe Teilung in Umfangsrichtung gegeneinander versetzt angeordnet, dergestalt, daß jeweils die Mitte eines Vorsprungs 815 der Hülse zwischen zwei Vorsprüngen 32 liegt. Der axiale Abstand "a" zwischen den Vorsprüngen 32 und 815 ist kleiner, als die axiale Breite "b" des Dichtrings, wodurch dem Dichtring bereits beim Einbau eine in Umfangsrichtung gesehen wellige Form aufgeprägt wird.

Literatur:

/1/ Brink, R.V., "The heat load of an oil seal", Paper C1, 6. International Conference on Fluid Sealing, 1973, München

/2/ Leyer, A., "Maschinenkonstruktionslehre", Technica Nr. 10, 1966, S. 941 ff

/3/ Martini, L.J., "Slanted O-Rings Extend Shaft Life", Machine Design, Feb. 8, 1979

/4/ "Wellendichtung" DE 3 207 327 A1 vom 1.3.1982

## Patentansprüche

1. Wellendichtung mit einem elastischen, von dem abzudichtenden Druck beaufschlagten Dichtring, dessen niederdruckseitige Stirnfläche über mehrere Vorsprünge abgestützt ist, derart, daß seine mit einer zylindrischen Gegengleitfläche zusammenwirkende Dichtfläche einen wellenartigen Verlauf aufweist, dadurch gekennzeichnet, daß die Vorsprünge (32) an einem Stützring (3) angeordnet sind und der Dichtringquerschnitt zu wellenartiger Verformung unter der Einwirkung des abzudichtenden Drucks bemessen ist.

2. Wellendichtung nach Anspruch 1, dadurch gekennzeichnet, daß die Stirnflächen der Vorsprünge von quer zur Umfangsrichtung verlaufenden Kanten begrenzt sind.

3. Wellendichtung nach Anspruch 1 oder 2, dadurch gekennzeichnet, daß die Vorsprünge durch eine wellenförmige Stirnfläche gebildet werden.

4. Wellendichtung nach einem der Ansprüche 1 bis 3, dadurch gekennzeichnet, daß die Stirnflächen der Vorsprünge etwa radial verlaufen.

5. Wellendichtung nach einem der Ansprüche 1 bis 4, dadurch gekennzeichnet, daß die Stirnflächen der Vorsprünge eine axiale Richtungskomponente aufweisen.

6. Wellendichtung nach einem der Ansprüche 1 bis 5, dadurch gekennzeichnet, daß die beiden Flanken der Vorsprünge im Zylinderschnitt unterschiedliche Steilheit aufweisen.

7. Wellendichtung nach einem der Ansprüche 1 bis 6, mit einem Dichtring aus Kunststoff sowie einem den Dichtring anpressenden und zugleich als Nebenabdichtung wirkenden Spannring (2) aus Elastomer-Werkstoff, dadurch gekennzeichnet, daß die Vorsprünge (32) lediglich den Dichtring abstützen.

8. Wellendichtung nach einem der Ansprüche 1 bis 6, dadurch gekennzeichnet, daß bei Verwendung eines Dichtrings (1) aus Kunststoff sowie eines den Dichtring anpressenden und zugleich als Nebendichtung wirkenden Spannrings (2) aus Elastomer-Werkstoff die Vorsprünge sowohl den Dichtring als auch den Spannring abstützen.

9. Wellendichtung nach Anspruch 7 oder 8, dadurch gekennzeichnet, daß der Stützring (3) in seinen beiden Stirnflächen (31) und (33) Vorsprünge (32) und (43) aufweist.

10. Wellendichtung nach Anspruch 9, dadurch gekennzeichnet, daß der Stützring (3) in bezug auf seine zur Wellenachse senkrechte Mittelebene spiegelsymmetrisch ausgeführt ist.

11. Wellendichtung nach Anspruch 7, dadurch gekennzeichnet, daß die dem Dichtring zugewandte Oberfläche (31) des Stützrings (3) an der die Vorsprünge (32) angebracht sind eine Kegelfläche ist und daß der Dichtring (1) eine konische Ringscheibe aus Kunststoff ist, die an ihrer der gleitenden Gegendichtfläche zugewandten Seite eine Dichtkante (11) aufweist.

12. Wellendichtung nach Anspruch 7, dadurch gekennzeichnet, daß die druckabgewandte Stirnfläche (17) des Dichtrings (1) gegenüber der druckabgewandten, stirnseitigen Anlagefläche des Spannrings axial zur Niederdruckseite hin versetzt angeordnet ist.

13. Wellendichtung nach Anspruch 12, dadurch gekennzeichnet, daß die Dichtkante (11) des Dichtrings (1) in unmittelbarer Nähe der Stirnfläche (17) angeordnet ist.

14. Wellendichtung nach einem der Ansprüche 7 bis 11, dadurch gekennzeichnet, daß der Stützring (3) eine Teilfuge (37) aufweist.

15. Wellendichtung nach einem der Ansprüche 1 bis 14, dadurch gekennzeichnet, daß der Dichtring (1) in einer Hülse (81) angeordnet ist, wobei die Hülse zum Gehäuse (8) radiales Spiel aufweist.

16. Wellendichtung nach einem der Ansprüche 1 bis 15, dadurch gekennzeichnet, daß die Vorsprünge (32) Absätze (321) aufweisen und daß die zwischen den Vorsprüngen angeordneten Anlageflächen (31) Absätze (322) aufweisen, dergestalt, daß eine den Absätzen zugewandte Kante (100) des Dichtrings an den Absätzen zur Anlage kommt, wodurch bei Druckeinwirkung ein radiales Gleiten des Dichtrings auf den Vorsprüngen und den Anlageflächen verhindert wird.

17. Wellendichtung nach einem der Ansprüche 1 bis 16, dadurch gekennzeichnet, daß seitlich an den Dichtring angrenzend ein Pumpring (83) angeordnet ist, der an seiner dem rotierenden Maschinenteil zugewandten Zylinderfläche schräg zur Achse angeordnete Nuten (831) aufweist.

18. Wellendichtung nach einem der Ansprüche 1 bis 17, dadurch gekennzeichnet, daß der Dichtring von einer aus mindestens zwei Blechteilen bestehenden Hülle umfaßt ist, dergestalt, daß eines der Blechteile den Stützring (3), ein anderes eine Hülse (81) bildet, wobei in den Stützring Vorsprünge (32) und in die Hülse Vorsprünge (815) eingeprägt sind, wobei die Vorsprünge (32) und (815) gegeneinander am Umfang um eine halbe Teilung versetzt angeordnet sind und die dem Dichtring zugewandten Oberflächen der Vorsprünge axial einen kleinsten Abstand "a" aufweisen, der kleiner ist, als die axiale Breite "b" des Dichtrings.

## Claims

1. Shaft seal with an elastic seal ring subjected to the pressure to be sealed whose low-pressure end face is supported by a number of projections, such that its sealing face interacting with a cylindrical mating sliding face is of wavelike form, characterised by the fact that the projections (32) are located on a support ring (3) and that the seal ring cross-section is designed for wavelike deformation under the influence of the pressure to be sealed off.

2. Shaft seal in accordance with claim 1, characterised by the fact that the end faces of the projections are delimited by edges running at right angles to circumferential direction.

3. Shaft seal in accordance with claim 1 or 2, characterised by the fact that the projections are formed by a wave-shaped end face.

4. Shaft seal in accordance with one of claims 1 to 3, characterised by the fact that the end faces run approximately radially.

5. Shaft seal in accordance with one of claims 1 to 4, characterised by the fact that the end faces of the projections incorporate an axial directional component.

6. Shaft seal in accordance with one of claims 1 to 5, characterised by the fact that in cylindrical section the two flanks of the projections are of different steepness of angle.

7. Shaft seal in accordance with one of claims 1 to 6, with a plastic seal ring plus a tension ring (2) made of elastomer material exerting pressure on the seal ring and at the same time acting as secondary seal, characterised by the fact that the projections (32) only support the seal ring.

8. Seal ring in accordance with one of claims 1 to 6, characterised by the fact that when a plastic seal ring (1) plus a tension ring (2) of elastomer material exerting pressure on the seal ring and at the same time acting as secondary seal is used, the projections support both the seal ring and the tension ring.

9. Shaft seal in accordance with claim 7 or 8, characterised by the fact that the support ring (3) has projections (32) and (43) on its two end faces (31) and (33)

10. Shaft seal in accordance with claim 9, characterised by the fact that support ring (3) is mirror-image symmetrical in respect of its centre plane at right angles to the shaft axis.

11. Shaft seal in accordance with claim 7, characterised by the fact that the surface (31) of support ring (3), on which the projections (32) are located, which faces towards the seal, is a tapered face and that seal ring (1) is a conical plastic annular disk whose side facing towards the sliding counter-sealing face has a sealing edge (11).

12. Shaft seal in accordance with claim 7, characterised by the fact that the end face (17) of seal ring (1) facing away from the pressure is offset axially on the low pressure side in relation to the end contact face of the tension ring facing away from the pressure.

13. Shaft seal in accordance with claim 12, characterised by the fact that the sealing edge (11) of seal ring (1) is located in direct proximity to end face (17).

14. Shaft seal in accordance with one of claims 7 to 11, characterized by the fact that support ring (3) has a partial gap (37).

15. Shaft seal in accordance with one of claims 1 to 14, characterised by the fact that the seal ring (1) is located in a sleeve (81), the sleeve having radial clearance in relation to housing (8).

16. Shaft seal in accordance with one of claims 1 to 15, characterised by the fact that projections (32) have steps (321) and that the contact faces (31) located between the projections have steps (322) such that one edge (100) of the seal ring facing towards the steps makes contact on the steps, as a result of which when pressure is exerted, radial sliding of the seal ring on the projections and the contact faces is prevented.

17. Shaft seal in accordance with one of claims 1 to 16, characterised by the fact that a pump ring (83) is located adjacent to the side of the seal ring; this pump ring has on its cylindrical face, which faces the rotating machine part, grooves (831) positioned diagonally in relation to the axis.

18. Shaft seal in accordance with one of claims 1 to 17, characterised by the fact that the seal ring is surrounded by a sleeve consisting of at least two sheet metal sections, such that one of the sheet metal sections forms support ring (3) and another forms a sleeve (81), projections (32) being embossed in the support ring and projections (815) in the sleeve, the projections (32) and (815) being located offset to one another around the circumference by one half pitch increment and the surfaces of the projections facing the seal ring having axially a minimum clearance "a" which is less than the axial width "b" of the seal ring.

## Revendications

1. Garniture étanche pour arbre, comprenant une bague d'étanchéité élastique sollicitée par la pression que la garniture doit tenir, bague dont la surface frontale du côté basse pression est soutenue au moyen de plusieurs saillies de telle manière que sa surface d'étanchéité, qui coopère avec une contre-surface cylindrique de glissement, présente un tracé onduleux, caractérisée en ce que les saillies (32) sont disposées sur une bague d'appui (3) et en ce que la section transversale de la bague d'étanchéité est dimensionnée de façon à permettre une déformation onduleuse sous l'effet de la pression que la garniture doit tenir.

2. Garniture étanche pour arbre selon la revendication 1, caractérisée en ce que les surfaces frontales des saillies sont limitées par des arêtes qui s'étendent transversalement par rapport à la direction circonférentiele.

3. Garniture étanche pour arbre selon la revendication 1 ou 2, caractérisée en ce que les saillies sont formées par une surface frontale onduleuse.

4. Garniture étanche pour arbre selon l'une quelconque des revendications 1 à 3, caractérisée en ce que les surfaces frontales des saillies s'étendent à peu près radialement.

5. Garniture étanche pour arbre selon l'une quelconque des revendications 1 à 4, caractérisée en ce que les surfaces frontales des saillies présentent une composante directionnelle axiale.

6. Garniture étanche pour arbre selon l'une quelconque des revendications 1 à 5, caractérisée en ce que les deux flancs des saillies présentent des pentes différentes en coupe cylindrique.

7. Garniture étanche pour arbre selon l'une quelconque des revendications 1 à 6, comportant une bague d'étanchéité en matière plastique, ainsi qu'une bague de serrage (2) en une matière élastomère qui presse la bague d'étancheité contre l'arbre et sert en même temps d'organe d'étanchéité secondaire, caractérisée en ce que les saillies (32) soutiennent uniquement la bague d'étanchéité.

8. Garniture étanche pour arbre selon l'une quelconque des revendications 1 à 6, caractérisée en ce qu'en cas d'utilisation d'une bague d'étanchéite en matière plastique (1), ainsi que d'une bague de serrage (2) en une matière élastomère qui presse la bague d'étanchéité contre l'arbre et sert en même temps d'organe d'étanchéité secondaire, les saillies soutiennent aussi bien la bague d'étanchéité que la bague de serrage.

9. Garniture étanche pour arbre selon la revendication 7 ou 8, caractérisée en ce que la bague d'appui (3) présente des saillies (32) et (34) sur ses deux surfaces frontales (31) et (33).

10. Garniture étanche pour arbre selon la revendication 9, caractérisée en ce que la bague d'appui (3) est réalisée avec une symétrie spéculaire par rapport à son plan médian perpendiculaire à l'axe de l'arbre.

11. Garniture étanche pour arbre selon la revendication 7, caractérisée en ce que la surface (31) de la bague d'appui (3) qui est située du côté de la bague d'étanchéité et sur laquelle sont placées les saillies (32) est une surface conique et en ce que la bague d'étanchéité (1) est un disque annulaire conique en matière plastique qui présente une arête d'étanchéité (11) sur son côté dirigé vers la contre-surface glissante d'étanchéité.

12. Garniture étanche pour arbre selon la revendication 7, caractérisée en ce que la surface frontale (17) de la bague d'étanchéité (1) située du côté à l'opposé de la pression est en position décalée axialement vers le côté basse pression par rapport à la surface frontale d'appui de la bague de serrage, située du côté à l'opposé de la pression.

13. Garniture étanche pour arbre selon la revendication 12, caractérisée en ce que l'arête d'étanchéité (11) de la bague d'étanchéité (1) est disposée à proximité immédiate de la surface frontale (17).

14. Garniture étanche pour arbre selon l'une quelconque des revendications 7 à 11, caractérisée en ce que la bague d'appui (3) présente une fente partielle (37).

15. Garniture étanche pour arbre selon l'une quelconque des revendications 1 à 14, caractérisée en ce que la bague d'étanchéité (1) est disposée dans une douille (81), la douille présentant un jeu radial par rapport au boîtier (8).

16. Garniture étanche pour arbre selon l'une quelconque des revendications 1 à 15, caractérisée en ce que les saillies (32) présentent des gradins (321) et en ce que les surfaces d'appui (31) disposées entre les saillies présentent des gradins (322), de façon à ce qu'une arête (100) de la bague d'étanchéité du côté qui fait face aux gradins vienne s'appliquer sur les gradins, ce qui empêche, sous l'effet de la pression, un glissement radial de la bague d'étanchéité sur les saillies et sur les surfaces d'appui.

17. Garniture étanche pour arbre selon l'une quelconque des revendications 1 à 16, caractérisée en ce qu'il est disposé, en position latéralement contiguë à la bague d'étanchéité, un anneau de pompage (83) qui présente, sur sa surface cylindrique orientée vers la partie de la machine qui tourne, des gorges (831) disposées obliquement par rapport à l'axe.

18. Garniture étanche pour arbre selon l'une quelconque des revendications 1 à 17, caractérisée en ce que la bague d'étanchéité est entourée par une enveloppe formée d'au moins deux pièces de tôle, de façon à ce qu'une des pièces de tôle forme la bague d'appui (3) et qu'une autre forme une douille (81), des saillies (32) étant empreintes dans la bague d'appui et des saillies (815) étant empreintes dans la douille, les saillies (32) et (815) étant en position mutuellement décalée d'un demi-pas sur la circonférence et les surfaces des saillies orientées vers la bague d'étanchéité présentant axialement une distance minimale "a" qui est plus petite que la largeur axiale "b" de la bague d'étanchéité.

Fig.1

Fig.2

Fig.3

Fig.4

Fig.5

Fig.6
(A-B)

Fig.7

Fig.8

Fig.9

F i g.10

F i g.11

# F i g .12

# F i g .13

# F i g.14

Fig. 15

82 8 81 3 32 2 1 832

811

84

85

83

P

831

322 100 321

Fig. 16

832

831

Fig.17

Fig.18

# F i g.19

Fig.20

Fig.21

Fig.22